Europäisches Patentamt

European Patent Office

Office européen des brevets

(19)

(11) Veröffentlichungsnummer: **0 184 106 B1**

# (12) EUROPÄISCHE PATENTSCHRIFT

(45) Veröffentlichungstag der Patentschrift: **03.07.91**

(21) Anmeldenummer: **85114947.6**

(22) Anmeldetag: **26.11.85**

Die Akte enthält technische Angaben, die nach dem Eingang der Anmeldung eingereicht wurden und die nicht in dieser Patentschrift enthalten sind.

(51) Int. Cl.5: **C08G 59/62, C08L 63/00, C09D 5/34**

(54) Harzlösungen für Kitte und Beschichtungsmassen, Verfahren zu ihrer Herstellung und ihre Verwendung.

(30) Priorität: **05.12.84 DE 3444281**

(43) Veröffentlichungstag der Anmeldung:
**11.06.86 Patentblatt 86/24**

(45) Bekanntmachung des Hinweises auf die Patenterteilung:
**03.07.91 Patentblatt 91/27**

(84) Benannte Vertragsstaaten:
**AT BE CH DE FR GB IT LI NL SE**

(56) Entgegenhaltungen:
**DE-A- 1 113 565
US-A- 3 491 041
US-A- 4 267 236**

(73) Patentinhaber: **HOECHST AKTIENGESELL-SCHAFT
Postfach 80 03 20
W-6230 Frankfurt am Main 80(DE)**

(72) Erfinder: **Hesse, Wolfgang, Dr.
Rossbachhöhe 42
W-6204 Taunusstein(DE)**
Erfinder: **Rauhut, Klaus, Dr.
Pfingstbornstrasse 13
W-6200 Wiesbaden(DE)**

EP 0 184 106 B1

## Beschreibung

Es ist bekannt, Polykondensate des Furfurylalkohol als Bindemittel für säurehärtende Kitte zu verwenden. Als zweite Hauptkomponente dieser Kitte dienen Füllstoffe, denen als Härtungs-Katalysator Säuren oder säureabspaltende Substanzen beigemischt sind, die ohne Wärmezufuhr eine Härtung bewirken.

Es ist aus der DE-C 2.926,053 auch bekannt, Furfurylalkohol mit einem Hydroxymethylgruppen-enthaltenden Alkylphenolresol auf der Basis von bifunktionellen Alkylphenolen bei erhöhter Temperatur umzusetzen und das Reaktionsprodukt in mindestens einem reaktiven Verdünner aus der Gruppe Benzylalkohol, niedermolekulare Epoxidverbindungen, Furfurol, Difurylether, Furfurylalkohol zu lösen, um die sonst starke Nachschwindung von Furankitten zu vermeiden. Der Zusatz von niedermolekularen Epoxidverbindungen beeinflußt das elastische Verhalten der Härtungsprodukte nicht, jedoch weisen sie eine gewisse Empfindlichkeit gegenüber einigen aggressiven, organischen Lösemitteln auf, die in der Praxis für eine Anzahl von Fällen Bedeutung haben, wie Ketone, chlorierte und aromatische Kohlenwasserstoffe, sowie Ester.

Die Anwesenheit von Furfurylalkohol in Kunststoffzementen aus 1,5 - 1,6 Gew.-% Furfurylalkohol, 14 - 16 Gew.-% Furan-Epoxyd-Bindemittel, 2,8 - 3,2 Gew.-% Polyethylenpolyamin und mineralischen Füllstoffen soll, einer anderen Druckschrift (SU-PS 619 464) nach, einerseits die Festigkeit dieser Zemente erhöhen und andererseits die Nachschwindung vermindern. Ein solches Material findet Verwendung in der Bauindustrie zur Herstellung korrosionsfester Überzüge und als chemisch widerstandsfähiges Material für die Bodenbeschichtung. Allerdings ist die Schrumpfung mit 0,75 % relativ hoch.

Diese Vernetzungsprodukte eignen sich auch nicht für die Herstellung von Kittharzen oder von Kitten, die hohen chemischen Beanspruchungen ausgesetzt sind, weil sie wegen ihres Amingehalts die zur Aushärtung des Kittes erforderliche Säurekatalyse inhibieren und zudem im vernetzten Zustand nicht die genügende Säure- und Alkalifestigkeit aufweisen.

Aus der DE-B- 1 113 565 ist die Umsetzung von Epoxydharzen mit Furfurylalkohol in Gegenwart von Friedel-Crafts-Verbindungen, Metallfluorboraten oder Bortrifluorid als Katalysatoren bekannt. Es werden nach diesem Verfahren jedoch nur ausgehärtete Kunststoffe wie Gießkörper aber keine lagerstabilen Harzlösungen erhalten.

In der Patentschrift US-A- 4.100.314 ist beschrieben, als Überzugsmittel für teerimprägnierte Kohlekörper eine Kunstharzlösung zu verwenden, die aus vernetzenden Furanverbindungen z.B. einer Mischung aus gleichen Teilen Furfurol und Furfurylalkohol, Diäthylsulfat als Katalysator und Epoxidharzen besteht. Die Vernetzung erfolgt bei Temperaturen zwischen 100 bis 135° C und ist allein schon deswegen nicht für die Herstellung von Kitten geeignet, weil diese bei Raumtemperatur oder zumindestens in Nähe der Raumtemperatur vernetzen müssen.

Es ist ferner bekannt, Furanharze auf vielfältige Weise zu modifizieren. So kann man Furfurol mit Phenol zu Novolaken umsetzen, die zur Herstellung von Phenolharz-Preßmassen dienen. Diese Harze sind aber schon wegen ihrer zu hohen Eigenviskosität nicht für die Herstellung von Kitten brauchbar.

Es ist auch bekannt, Kondensate des Furfurylalkohol mit Harnstoff und Formaldehyd zu modifizieren und diese Polykondensate als Kernbindemittel zu verwenden. Aber auch die bekannte Einbeziehung von Phenol in diese Modifizierung verändert nicht die mangelnde Chemikalienbeständigkeit und geringe thermische Beständigkeit dieser Polykondensate, die bei der Herstellung von Kernbindemitteln im allgemeinen notwendig ist.

Auch die bekannte Reaktion von Furfurylalkohol mit Phenolen oder mit Resorcin führt nicht zu geeigneten Harzen für Kitte oder Beschichtungsmassen, sondern zu Harzen, die nur als Bindemittel für Leime, Preßmassen oder Lacke brauchbar sind. Ebenfalls liefert die Umsetzung zwischen Hydroxybenzylalkohol und Furfurylalkohol kein brauchbares Kittharz. Beim Versuch, derartige Polykondensate mit einem Füllstoff, der saure Katalysatoren enthält zu mischen, läuft eine stürmische Polykondensationsreaktion ab. Das so gewonnene Härtungsprodukt schrumpft und ist zudem sehr anfällig gegen Alkali.

Die DE-A- 27 50 704 beschreibt die Herstellung von Umsetzungsprodukten aus hydroxyaromatischen Verbindungen, Formaldehyd und Furfurylalkohol, wobei der Furfurylalkohol gegebenenfalls auch in solchem Überschuß eingesetzt werden kann, daß er als Lösungsmittel wirkt. Außerdem kann das Reaktionsprodukt mit sauren Katalysatoren gehärtet werden. Diese bekannten, mit Furfurylalkohol modifizierten Resolharze sollen nach dieser Veröffentlichung mit anderen Monomeren, wie Isocyanaten, zu flammwidrigen kompakten Formkörpern, vorzugsweise jedoch zu Schaumstoffen, verarbeitet werden. An die Herstellung von Kitten wurde dabei nicht gedacht.

Die bei Herstellung von säurehärtenden Kitten bisher üblicherweise eingesetzten Furanharze ergeben Kitte mit sehr guter Chemikalienbeständigkeit. Insbesondere sind die Furankitte hoch alkalibeständig. Nachteile von Furankitten bestehen aber in ihrer relativ hohen Sprödigkeit, der ihren Einsatz bei speziellen Anwendungen, z.B. beim Verkitten von Apparateteilen, aber vor allem bei der Verwendung in Beschichtungsmassen, die im engeren Sinne gemeint sind, ausschließt. Der Elastizitätsmodul der gehärteten Kitte liegt bei 1,2 bis 2,0 $N^6$ . $cm^2$. Dieser relativ hohe Elastizitätsmodul der bisher verwendeten Furanharzkitte ist wegen der damit verbundenen Sprödigkeit nachteilig. Die Sprödigkeit kann dazu führen, daß in mit Furanharzkitt verlegten Plattenbelägen aus säurefesten keramischen Materialien leicht Ablösungen vom Untergrund und Risse auftreten können, wenn durch Temperaturwechsel bzw. Temperaturänderung die unterschiedlichen Wärmeausdehnungskoeffizienten von Kitt, keramischen Materialien und dem Untergrund wirksam werden. Der Verbund von Kitt, Keramikmaterial und Untergrund ist gegenüber Rißbildung und Ablösung bei Temperaturwechsel nämlich umso unempfindlicher, je niedriger der Elastizitätsmodul des Kittes ist. Der Kitt ist dann weniger spröde und damit sind größere Verformbarkeiten möglich, ohne daß es zur Rißbildung und Ablösung kommt. Die Temperaturbeständigkeit der bisher eingesetzten Furanharzkitte lag im allgemeinen bei etwa 200 bis 210 $^\circ$ C. Die gleichen Gesetzmäßigkeiten gelten auch für Beschichtungsmassen. Aufgrund der erwähnten Nachteile wurde die Verwendung dieser Furanharze für Kitte oder Beschichtungsmassen bisher nicht beschrieben. Es ist deshalb wünschenswert, Kitte und Beschichtungsmassen zur Verfügung zu haben, die diese geschilderten Nachteile nicht aufweisen.

Aus der US-A- 3 491 041 sind Harzlösungen bekannt, die Umsetzungsprodukte von Epoxidharzen und Furfurylalkohol gelöst in überschüssigem Furfurol alkohol und ineuben lösüngsmitteln enthalten.

Gegenstand der Erfindung sind nun Harzlösungen für Kitte und Beschichtungsmassen und ein Verfahren zu ihrer Herstellung, bei dem Epoxidharze in Furfurylalkohol allein oder in Mischung mit anderen Furanderivaten gelöst und bei Temperaturen zwischen 20 und 200 $^\circ$ C vorzugsweise zwischen 40 und 140 $^\circ$ C in Gegenwart von Katalysatoren in der Weise umgesetzt werden, daß die Reaktion unter vollständiger Umsetzung der Epoxidgruppen mit Furfurylalkohol bzw. Furanderivaten erfolgt, wobei gegebenenfalls der Katalysator nach der Umsetzung neutralisiert und wobei die Reaktionsmischung ausschließlich mit reaktiven Verdünnungsmitteln versetzt wird.

Überraschenderweise zeigen die erfindungsgemäß hergestellten Kitte neben einer hohen Lagerbeständigkeit sämtliche positiven Eigenschaften von Furanharzkitten, eine ausgezeichnete chemische Beständigkeit und eine thermische Beständigkeit bis zu Temperaturen von 320 $^\circ$ C. Dazu sind die Kitte noch sehr schwindungsarm. Außerdem weisen sie bei guter Gebrauchsdauer eine verkürzte Härtungszeit auf und sind trotzdem gegen Chemikalien außerordentlich beständig.

Als Epoxidharze können sämtliche Epoxidharze verwendet werden, die mehr als eine Epoxidgruppe pro Molekül enthalten z.B. solche, die durch Reaktion von Epihalogenhydrinen mit mehrwertigen Alkoholen oder Polyglykolethern oder durch Epoxidierung von Doppelbindungen, z.B. durch Epoxidierung von ungesättigten fetten Ölen oder ungesättigten Kohlenwasserstoffen, z.B. Dicyclopentadien, Butadien usw. hergestellt werden. Bevorzugt sind Epoxidharze, die aus Diphenylalkanen oder höheren Polyphenylolkanen wie Novolaken und Epihalogenhydrinen bzw. Dihalogenhydrinen, vorzugsweise Epichlorhydrin erhalten werden. Sie haben im allgemeinen ein Epoxidäquivalentgewicht von 150 bis 2000, vorzugsweise 170 und 1200.

Die Umsetzung der Epoxidharze mit Furfurylalkohol bzw. im Gemisch mit anderen Furanderivaten erfolgt, indem die Epoxidharze z.B. in Furfurylalkohol gelöst werden und bei Temperaturen zwischen 20 $^\circ$ C und 200 $^\circ$ C vorzugsweise zwischen 40 $^\circ$ C und 140 $^\circ$ C in Gegenwart von Katalysatoren zur Reaktion gebracht werden, bis die Epoxidgruppen umgesetzt sind. Die vollständige Umsetzung kann durch die Bestimmung des Epoxid-Gehaltes des Reaktionsansatzes oder durch Bestimmung des Trockenrückstandes kontrolliert werden.

Während bei Verwendung von sauren Katalysatoren diese nach der Umsetzung neutralisiert werden müssen, ist eine solche Neutralisation bei Verwendung von basischen Katalysatoren nicht immer erforderlich.

Als Katalysatoren für die Umsetzung der Epoxidharze mit Furfurylalkohol können starke Mineralsäuren, Alkyl- oder Arylsulfonsäuren eingesetzt werden. Es ist jedoch bevorzugt, mit basischen Katalysatoren zu arbeiten. Geeignete Katalysatoren sind besonders die Hydroxide der Alkalimetalle, z.B. auch in Form ihrer wäßrigen Lösungen. Es ist ebenfalls möglich, als Katalysatoren tertiäre Alkylamine mit 1-6 vorzugsweise bis 4 C-Atomen im Alkylrest wie Trimethylamin, Triethylamin, tert.-Butylamin, usw. zu verwenden. Es können auch solche Trialkyle verwendet werden, die zusätzlich primäre oder sekundäre Aminofunktionen aufweisen, z.B. Dimethylaminopropylamin. Bei Verwendung dieser Amine, die über ihre primären und/oder oder sekundären Amingruppen in das Epoxidharz eingefügt werden, ist dafür Sorge zu tragen, daß ihre Menge nur so klein ist, daß diese die spätere Säurehärtung nicht beeinträchtigt. Sofern die Amin-Katalysatoren in größerer Menge eingesetzt werden, ist ihre Entfernung aus dem Reaktionsgemisch aber im allgemeinen stets angebracht, wobei sie auch durch Salzbildung erfolgen kann.

Es ist ferner möglich, außer Furfurylalkohol andere Furan-Derivate wie Furfurol, Hydroxymethylfurfurol, Difurylether und andere mitzuverwenden. Diese Verbindungen können bereits während der Umsetzung zugegen sein oder nachträglich zugemischt werden, wobei der Überschuß als reaktives Verdünnungsmittel wirkt.

Gegenstand der Erfindung ist auch die Verwendung der erfindungsgemäß hergestellten Harzlösungen für Kitte und Beschichtungsmassen, bei der die Harzlösung unmittelbar vor ihrer Anwendung mit

A. mindestens einem Füllstoff und

B. mindestens einem Härter

vermischt wird, wobei das Gewichtsverhältnis der Harzlösung zu der Summe der Komponenten A und B 1:-(0,5 bis 7) vorzugsweise 1:(1 bis 4) beträgt. Die eingesetzten Harzlösungen haben im allgemeinen einen Festharzanteil von 10 bis 75 vorzugsweise 25 bis 70, insbesondere 45 bis 55 Gew.-% Festkörpergehalt.

Die modifizierten Furanharze werden gemäß der beanspruchten Verwendung ausschließlich in reaktiven Verdünnungsmitteln eingesetzt, wobei in allgemeinen das Gewichtsverhältnis Verdünnungsmittel zu Festharz (0,4 bis 1,5):1, vorzugsweise (0,6 bis 1,1):1 beträgt. Verdünnungsmittel sind z.B. Benzylalkohol, niedrig molekulare Epoxidverbindungen wie Diglycidyläther, Diphenylolpropandiglycidyläther vor allem aber Furfurol, Difuryläther, vorzugsweise Furfurylalkohol. Dieser und die Furankomponenten können aber bereits bei der Umsetzung mit den Epoxidverbindungen von vornherein im Überschuß vorliegen. Die Lagerfähigkeit der Harzlösungen ist praktisch unbegrenzt. Sie haben im allgemeinen Viskositäten zwischen 50 und 20 000, vorzugsweise 100 und 15 000 mPa.s/20° C.

Als Füllstoff A) bei der Herstellung der Kitte können Gesteinsmehle wie Ton und Schamotte, Bariumsulfat, Quarzmehl und vorzugsweise Koksmehl oder Graphitmehl, z.B. Kunstgraphit, verwendet werden.

Als Härter B) für die Härtung der Kitte können saure und/oder säurebildende Substanzen z.B. (a) anorganische oder organische Säuren, wie Schwefelsäure, Salzsäure, Phosphorsäure, gewöhnlich in wäßriger Lösung, Oxalsäure, Sulfonsäuren, wie Amidosulfonsäure, Mono- und Disulfonsäuren von Benzol, Toluol, Xylol, ferner Naphthalindisulfonsäuren und/oder (b) säureabspaltende Substanzen wie Sulfochloride der unter (a) genannte Sulfonsäuren, z.B. Toluol- oder Benzol-Sulfochlorid, Alkylester dieser Sulfonsäuen oder saure Schwefelsäureester und/oder (c) saure Salze der Schwefelsäure oder Phosphorsäure, vorzugsweise deren Natriumsalze, verwendet werden. Weiterhin finden Addukte aus Harnstoff und aromatischen Sulfonsäuren einzeln oder im Gemsch mit obigen Harzen Verwendung. Der Anteil der Härter beträgt 4 bis 12, vorzugsweise 6 bis 8 Gew.-% des Füllstoff-Härter-Gemisches.

Die Kitte werden zubereitet, indem die Lösung des Furanharzes mit einem Füllstoff A) und Katalysator bzw. Härter B) unmittelbar vor dem Gebrauch gemischt werden. Im allgemeinen wird eine Mischung aus Füllstoff und Härtersubstanz, dem sogenannten Kittmehl, vorgefertigt und diese der Furanharzlösung zugesetzt. Der erhaltene Kitt wird dann nach den üblichen Methoden auf oder zwischen die zu verkittenden Materialien gebracht. Zur Bewertung des Kittes werden die Eigenschaften des Furanharzes, die Eigenschaften des Kittes nach dem Mischen des Furanharzes mit dem Kittmehl, der Verlauf der Härtung und die chemischen und die physikalischen Eigenschaften des Endproduktes herangezogen. Das Furanharz sollte dabei einen niedrigen Kondensationsgrad und somit eine niedrige Viskosität besitzen, damit es fließt und den Füllstoff gut benetzt. Gegebenenfalls ist der Anteil an reaktivem Verdünner so zu stellen, daß die Verarbeitung gegeben ist. Eine gute Lagerbeständigkeit ist eine weitere Voraussetzung für einen optimalen Einsatz . Der Kondensationsgrad sollte sich bei der Lagerung nur unwesentlich erhöhen, denn ein übermäßiger Viskositätsanstieg würde zur schlechteren Benetzung des Füllstoffes und damit zu Verarbeitungsfehlern führen.

Die Herstellung des Kittes erfolgt unmittelbar vor der Anwendung. Nach dem Mischen des Füllstoffes mit dem Furanharz setzt durch die Einwirkung des Katalysators sofort eine Vergrößerung des Furanharzmoleküls ein. Die Gebrauchsdauer, d.h. der Zeitabschnitt zwischen Mischen und Verlust der Verarbeitungskonsistenz sollte im allgemeinen 30 Minuten bis 2 Stunden betragen, damit eine bequeme Verarbeitung möglich ist. Nach der Verarbeitung ist es wünschenswert, daß der Kitt bei Raumtemperatur nach möglichst kurzer Zeit gehärtet ist und Beständigkeit gegen Chemikalien und Lösemittel gewinnt.

In den nachstehenden Beispielen sind T = Gewichtsteile und % = Gewichtsprozent.

Beispiele

1 a) Herstellung des Harzes

1425 T eines Epoxidharzes auf Basis von Diphenylolpropan und Epichlorhydrin mit einem durchschnittlichen Epoxidäquivalentgewicht von 425 wurden in einem mit Rührer und Thermometer ausgestatteten Reaktionsgefäß in 2013 T Furfurylalkohol gelöst und auf eine Temperatur von 60° C gebracht. Nach Zugabe von 25,5 T 33 %iger wäßriger Natronlauge wurde der Ansatz auf 100° C erwärmt und 4 Stunden bei dieser Temperatur gerührt.

Die Harzlösung besaß einen Rückstand (1 h/170°C) von 49,3 %, Viskosität 1250 mPa.s/20°C. Der darin enthaltene Alkalikatalysator wurde mit 19,1 T 80 %iger Milchsäure neutralisiert, wobei eine Lösung mit einer Viskosität von 1200 mPa.s/20°C erhalten wurde.

Anwendungstechnische Prüfung

1 b) Herstellung des Kittes: Für diese Prüfung wurde aus 93 Teilen Kohlenstoff und 6 Teilen eines ß-Naphthalinsulfonsäure-Harnstoff-Adduktes sowie einem Teil p-Toluolsulfonsäure ein Kittmehl (100 T) hergestellt und mit 60 Teilen der Harzlösung (1 a) vermischt. Der daraus hergestellte Kitt hatte bei 20°C eine Gebrauchsdauer von 75 Minuten und erreichte nach 24 Stunden einen Wert für die Shore-Härte D von 45.

Chemische Prüfung

1 c) Für die Bestimmung der chemischen Beständigkeit wurden aus dem Kitt zylindrische Körper mit einer Höhe und einem Durchmesser von jeweils 25 mm hergestellt und diese 8 Tage lang bei 20°C gelagert. Nach dieser Zeit waren die Prüfkörper beständig gegen siedende 70 %ige Schwefelsäure, siedende konzentrierte Salzsäure sowie gegen konzentrierte und verdünnte Natronlauge.

Physikalische Prüfungen

1 d) Die Messung der Linearschwindung erfolgte an zylindrischen Prüfkörpern mit 25 mm Durchmesser und 90 mm Länge, an deren Enden Meßmarkierungen aus Glas angebracht waren. Die Gesamtlänge ausschließlich der Meßmarkierungen betrug 100 mm. Die Prüfung erfolgte in Anlehnung an die Methode gemäß ASTM C 358. Die erste Längenmessung wurde 24 Stunden nach Herstellung der Prüfkörper vorgenommen und diente als Ausgangswert. Innerhalb eines Beobachtungszeitraumes von 94 Tagen betrug die Schwindung bei Raumtemperatur 0,18 %.

Bestimmung des Biege-Elastizitäts-Moduls (s. Tabelle).

2 a) Herstellung des Harzes

Entsprechend Beispiel 1 wurden 1425 T eines Epoxidharzes auf Basis von Diphenylolpropran und Epichlorhydrin mit einem durchschnittlichen Epoxidäquivalentgewicht von 950 in 1714 T Furfurylalkohol gelöst und bei 60°C mit 25,5 T 33 %iger wäßriger Natronlauge versetzt und anschließend auf 100°C gebracht. Nach vierstündigem Rühren bei dieser Temperatur besaß das Harz einen Rückstand von 49,5 % (1 H/170°C) und eine Viskosität von 13500 mPa.s.
Nach Neutralisation mit 19,1 T 80 %iger Milchsäure sank die Viskosität auf 12500 mPa.s.
Anwendungstechnische Prüfung

2 b) Herstellung des Kittes

Für die Prüfung wurde aus 93 Teilen Kohlenstoff und 6 Teilen ß-Naphthalinsulfonsäure-Harnstoff-Addukt sowie einem Teil p-Toluolsulfonsäure ein Kittmehl (100 T) hergestellt und mit 75 Teilen der Harzlösung 2 a) wie in Beispiel 1 vermischt. Der daraus hergestellte Kitt hatte bei 20°C eine Gebrauchsdauer von 80 Minuten und besaß nach 24 Stunden einen Shore-Härte D-Wert von 60.

Chemische Prüfung

2 c) Für die Bestimmung der chemischen Beständigkeit wurden aus dem Kitt zylindrische Körper mit einer Höhe und einem Durchmesser von jeweils 25 mm hergestellt und diese 8 Tage lang bei 20°C gelagert. Nach dieser Zeit waren die Prüfkörper beständig gegen siedende 70 %ige Schwefelsäure, siedende konzentrierte Salzsäure sowie gegen konzentrierte und verdünnte Natronlauge.

Physikalische Prüfungen

2 d) Die Messung der Linearschwindung erfolgte wie in Beispiel 1 d). Innerhalb eines Beobachtungszeitraumes von 94 Tagen betrug die Schwindung bei 20°C 0,2 %.
Bestimmung des Biege-Elastizitäts-Moduls an Prüfkörpern 10 x 15 x 120 mm:

| | Beispiel 1 | Beispiel 2 |
|---|---|---|
| E-Modul $/10^4 N/mm^2/$ | | |
| nach 8 d; 20°C | 0,44 | 0,52 |
| nach 28 d; 20°C | 0,63 | 0,60 |
| nach 28 d; 20°C plus 16 h; 90°C | 0,59 | 0,58 |

## Ansprüche

1. Harzlösung für Kitte und Beschichtungsmassen auf Basis eines Umsetzungsproduktes aus Epoxidharzen mit mehr als einer Epoxidgruppe im Molekül und Furfurylalkohol allein oder in Mischung mit anderen Furanderivaten, wobei die Umsetzung bei einer Reaktionstemperatur von 20-200 °C unter vollständiger Umsetzung der Epoxidgruppen mit Furfurylalkohol bzw. Furanderivaten, erfolgt, gelöst ausschließlich in reaktiven Verdünnungsmitteln.

2. Verfahren zur Herstellung von Harzlösungen für Kitte und Beschichtungsmassen gemäß Ansprüch 1, dadurch gekennzeichnet, daß Epoxidharze mit mehr als einer Epoxidgruppe im Molekül in Furfurylalkohol allein oder in Mischung mit anderen Furan-Derivaten gelöst und bei Temperaturen zwischen 20 und 200 °C in Gegenwart von sauren oder basischen Katalysatoren in der Weise umgesetzt werden, daß die Reaktion unter vollständiger Umsetzung der Epoxidgruppen mit Furfurylalkohol bzw. Furanderivaten erfolgt und gegebenenfalls der Katalysator nach der Umsetzung neutralisiert und die Reaktionsmischung mit ausschließlich reaktiven Verdünnungsmitteln versetzt wird.

3. Verfahren nach Anspruch 2, dadurch gekennzeichnet, daß die Reaktionstemperatur 40 bis 140 °C beträgt.

4. Ausführungsform nach einem oder mehreren der Ansprüche 1 bis 3, dadurch gekennzeichnet, daß das Gewichtsverhältnis von reaktiven Verdünnungsmitteln zu Festharz (0,4 bis 1,5):1 vorzugsweise (0,6 bis 1,1):1 beträgt.

5. Ausführungsform nach einem oder mehreren der Ansprüche 1 bis 4, dadurch gekennzeichnet, daß die Harzlösungen Viskositäten zwischen 50 und 20 000, vorzugsweise 100 und 15 000 mPa.s/20 °C besitzen.

6. Ausführungsform nach einem oder mehreren der Ansprüche 1 bis 5, dadurch gekennzeichnet, daß als Epoxidharze solche mit einem Epoxidäquivalentgewicht von 150 bis 2000, vorzugsweise 170 bis 1200 eingesetzt werden.

7. Ausführungsform nach einem oder mehreren der Ansprüche 1 bis 6, dadurch gekennzeichnet, daß als Furan-Derivate Furfurol, Hydroxymethylfurfurol oder Difurylether eingesetzt werden.

8. Verwendung der Harzlösung nach Anspruch 1 oder der nach einem oder mehreren der Ansprüche 2 bis 7 hergestellten Harzlösungen zur Herstellung von Kitten und Beschichtungsmassen, dadurch gekennzeichnet, daß die Harzlösung unmittelbar vor ihrer Anwendung mit
A) mindestens einem Füllstoff und
B) mindestens einem Härter oder einer Mischung aus A) und B) vermischt wird, wobei das Gewichtsverhältnis der Lösung zu der Summe der Komponenten A) und B) 1:(0,5-7); vorzugsweise 1:(1-4) beträgt.

9. Verwendung nach Anspruch 8, dadurch gekennzeichnet, daß als Komponente A) Gesteinsmehl, Bariumsulfat, Quarz-, Koks- oder Graphitmehl eingesetzt werden.

**10.** Verwendung nach Anspruch 8 oder 9, dadurch geknnzeichnet, daß als Komponente B) saure und/oder säurebildende Substanzen eingesetzt werden.

**11.** Verwendung nach einem oder mehreren der Ansprüche 8 bis 10, dadurch gekennzeichnet, daß eine vorgefertigte Mischung der Komponenten A) und B) eingesetzt wird.

**12.** Verwendung nach einem oder mehreren der Ansprüche 8 bis 11, dadurch gekennzeichnet, daß die Harzlösung einen Festharzanteil von 10 bis 75, vorzugsweise 25 bis 70 Gew.-% insbesondere 45 bis 55 Gew.-% besitzt.

Patentansprüche für folgenden Vertragsstaat: AT

**1.** Verfahren zur Herstellung von Harzlösungen für Kitte und Beschichtungsmassen, dadurch gekennzeichnet, daß Epoxidharze mit mehr als einer Epoxidgruppe im Molekül in Furfurylalkohol allein oder in Mischung mit anderen Furan-Derivaten gelöst und bei Temperaturen zwischen 20 und 200 °C in Gegenwart von sauren oder basischen Katalysatoren in der Weise umgesetzt werden, daß die Reaktion unter vollständiger Umsetzung der Epoxidgruppen mit Furfurylalkohol bzw. Furanderivaten erfolgt und gegebenenfalls der Katalysator nach der Umsetzung neutralisiert und die Reaktionsmischung mit ausschließlich reaktiven Verdünnungsmitteln versetzt wird.

**2.** Verfahren nach Anspruch 1, dadurch gekennzeichnet, daß die Reaktionstemperatur 40 bis 140 °C beträgt.

**3.** Verfahren nach den Ansprüchen 1 und 2, dadurch gekennzeichnet, daß das Gewichtsverhältnis von reaktiven Verdünnungsmitteln zu Festharz (0,4 bis 1,5):1 vorzugsweise (0,6 bis 1,1):1 beträgt.

**4.** Verfahren nach einem oder mehreren der Ansprüche 1 bis 3, dadurch gekennzeichnet, daß die Harzlösungen Viskositäten zwischen 50 und 20 000, vorzugsweise 100 und 15 000 mPa.s/20 °C besitzen.

**5.** Verfahren nach einem oder mehreren der Ansprüche 1 bis 4, dadurch gekennzeichnet, daß als Epoxidharze solche mit einem Epoxidäquivalentgewicht von 150 bis 2000, vorzugsweise 170 bis 1200 eingesetzt werden.

**6.** Verfahren nach einem oder mehreren der Ansprüche 1 bis 5, dadurch gekennzeichnet, daß als Furan-Derivate Furfurol, Hydroxymethylfurfurol oder Difurylether eingesetzt werden.

**7.** Verwendung der nach einem oder mehreren der Ansprüchen 1 bis 6 hergestellten Harzlösungen zur Herstellung von Kitten und Beschichtungsmassen, dadurch gekennzeichnet, daß die Harzlösung unmittelbar vor ihrer Anwendung mit
A) mindestens einem Füllstoff und
B) mindestens einem Härter oder einer Mischung aus A) und B) vermischt wird, wobei das Gewichtsverhältnis der Lösung zu der Summe der Komponenten A) und B) 1:(0,5-7); vorzugsweise 1:(1-4) beträgt.

**8.** Verwendung nach Anspruch 7, dadurch gekennzeichnet, daß als Komponente A) Gesteinsmehl, Bariumsulfat, Quarz-, Koks- oder Graphitmehl eingesetzt werden.

**9.** Verwendung nach Anspruch 7 oder 8, dadurch gekennzeichnet, daß als Komponente B) saure und/oder säurebildende Substanzen eingesetzt werden.

**10.** Verwendung nach einem oder mehreren der Ansprüche 7 bis 9, dadurch gekennzeichnet, daß eine vorgefertigte Mischung der Komponenten A) und B) eingesetzt wird.

**11.** Verwendung nach einem oder mehreren der Ansprüche 7 bis 10, dadurch gekennzeichnet, daß die Harzlösung einem Festharzanteil von 10 bis 75, vorzugsweise 25 bis 70 Gew.-% insbesondere 45 bis 55 Gew.-% besitzt.

## Claims

1. A resin solution for cements and coating compositions based on a reaction product of epoxy resins having more than one epoxy group in the molecule, with furfuryl alcohol alone or in mixture with other furan derivatives, the reaction being carried out at a reaction temperature of 20 to 200 °C with complete reaction of the epoxide groups with furfuryl alcohol or furan derivatives, dissolved exclusively in reactive diluents.

2. A process for preparing resin solutions for cements and coating compositions as claimed in claim 1, characterized in that epoxy resins having more than one epoxy group in the molecule are dissolved in furfuryl alcohol alone or in mixture with other furan derivatives, and are reacted at temperatures between 20 and 200 °C in the presence of acidic or basic catalysts, such that the reaction is run with complete reaction of the epoxy groups with furfuryl alcohol or furan derivatives and that, if appropriate, the catalyst is neutralized after the reaction, and the reaction mixture is mixed with reactive diluents exclusively.

3. The process as claimed in claim 2, characterized in that the reaction temperature is 40 to 140 °C.

4. An embodiment as claimed in one or several of claims 1 to 3, characterized in that the weight ratio of reactive diluents to solid resin is in the range of (0.4 to 1.5):1, preferably of (0.6 to 1.1):1.

5. The embodiment as claimed in one or several of claims 1 to 4, characterized in that the resin solutions have viscosities of between 50 and 20000, preferably of between 100 and 15000, mPa•s at 200 °C.

6. The embodiment as claimed in one or several of claims 1 to 5, characterized in that epoxy resins having an epoxy equivalent weight of 150 to 2000, preferably of 170 to 1200 are employed.

7. The embodiment as claimed in one or several of claims 1 to 6, characterized in that furfurol, hydroxymethylfurfurol or difurylether are used as furan derivatives.

8. Use of the resin solution as claimed in claim 1 or of the resin solutions prepared as claimed in one or several of claims 2 to 7, for preparing cements or coating compositions, characterized in that, immediately prior to its use, the resin solution is mixed with
A) at least one filler and B) at least one curing agent or a mixture of A) and B), the weight ratio of the solution to the sum of components A) and B) being 1:(0.5 to 7), preferably 1:(1 to 4).

9. The use as claimed in claim 8, characterized in that rock flour, barium sulfate, quartz flour, coke flour or graphite flour are employed as component A).

10. The use as claimed in any of claims 8 or 9, characterized in that acidic and/or acid-forming substances are used as component B).

11. The use as claimed in one or several of claims 8 to 10, characterized in that a mixture of components A) and B), which has been prepared in advance, is used.

12. The use as claimed in one or several of claims 8 to 11, characterized in that the resin solution has a content of solid resin of 10 to 75 % by weight, preferably of 25 to 70 % by weight, and in particular of 45 to 55 % by weight.

Claims for the following Contracting State: AT

1. A process for producing resin solutions for cements and coating compositions, characterized in that epoxy resins having more than one epoxy group in the molecule are dissolved in furfuryl alcohol alone or in mixture with other furan derivatives, and are reacted at temperatures of 20 to 200 °C in the presence of acidic or basic catalysts such that complete reaction of the epoxide groups with furfuryl alcohol or furan derivatives is achieved, and in that, if appropriate, the catalyst is neutralized after the reaction, and the reaction mixture is mixed with reactive diluents exclusively.

8

2. The process as claimed in claim 1, characterized in that the reaction temperature is 40 to 140 °C.

3. The process as claimed in claim 1 or 2, characterized in that the weight ratio of reactive diluents to solid resin is in the range of (0.4 to 1.5):1, preferably of (0.6 to 1.1):1.

4. The process as claimed in one or several of claims 1 to 3, characterized in that the resin solutions have viscosities of between 50 and 20000, preferably of between 100 and 15000, mPa•s at 200 °C.

5. The process as claimed in one or several of claims 1 to 4, characterized in that epoxy resins having an epoxy equivalent weight of 150 to 2000, preferably of 170 to 1200 are employed.

6. The process as claimed in one or several of claims 1 to 5, characterized in that furfurol, hydroxymethylfurfurol or difurylether are used as furan derivatives.

7. Use of the resin solution as claimed in one or several of claims 1 to 6 for preparing cements and coating compositions, characterized in that, immediately prior to its use, the resin solution is mixed with A) at least one filler and B) at least one curing agent or a mixture of A) and B), the weight ratio of the solution to the sum of components A) and B) being 1:(0.5 to 7), preferably 1:(1 to 4).

8. The use as claimed in claim 7, characterized in that rock flour, barium sulfate, quartz flour, coke flour or graphite flour are employed as component A).

9. The use as claimed in claims 7 or 8, characterized in that acidic and/or acid-forming substances are used as component B).

10. The use as claimed in one or several of claims 7 to 9, characterized in that a mixture of components A) and B), which has been prepared in advance, is used.

11. The use as claimed in one or several of claims 7 to 10, characterized in that the resin solution has a content of solid resin of 10 to 75 % by weight, preferably of 25 to 70 % by weight, and in particular of 45 to 55 % by weight.

**Revendications**

1. Solution de résines pour ciments et produits de revêtement à base d'un produit résultant de la réaction de résines époxydiques contenant plus d'un radical époxy par molécule avec l'alcool furfurylique, seul ou en mélange avec d'autres composés furanniques, la réaction ayant été effectuée à une température comprise entre 20 et 200 °C, l'opération ayant été exécutée de telle façon que la réaction des radicaux époxy avec l'alcool furfurylique ou les composés furanniques soit totale, et le mélange réactionnel étant dissous exclusivement dans des diluants réactifs.

2. Procédé pour préparer des solutions de résines pour des ciments et des produits de revêtement selon la revendication 1, procédé caractérisé en ce qu on dissout des résines époxydiques contenant plus d'un radical époxy par molécule, dans de l'alcool furfurylique seul ou en mélange avec d'autres composés furanniques, on fait réagir à des températures comprises entre 20 et 200 °C en présence de catalyseurs acides ou basiques, de telle façon que la réaction des radicaux epoxy avec l'alcool furfurylique et/ou les composés furanniques soit complète, puis, après la réaction, on neutralise éventuellement le catalyseur et on ajoute au mélange réactionnel des diluants qui sont uniquement des diluants réactifs.

3. Procédé selon la revendication 2 caractérisé en ce que la température réactionnelle est comprise entre 40 et 140 °C.

4. Mode d'exécution selon l'une quelconque des revendications 1 à 3 , caractérisé en ce que le rapport pondéral entre les diluants réactifs et la résine solide est compris entre 0,4:1 et 1,5:1, de préférence entre 0,6:1 et 1,1:1.

5. Mode d'exécution selon l'une quelconque des revendications 1 à 4, caractérisé en ce que les solutions de résines ont, à 20° C, des viscosités comprises entre 50 et 20 000 mPa.s, de préférence entre 100 et 15 000 mPa.s.

6. Mode d'exécution selon l'une quelconque des revendications 1 à 5, caractérisé en ce qu'on utilise, comme résines époxydiques, des résines époxydiques qui ont un poids équivalent d'époxy de 150 à 2000, de préférence de 170 à 1200.

7. Mode d'exécution selon l'une quelconque des revendications 1 à 6, caractérisé en ce qu'on utilise, comme composé furannique, le furfural, l'hydroxyméthylfurfural ou l'oxyde de difuryle.

8. Application de la solution de résines selon la revendication 1 ou des solutions de résines préparées selon l'une quelconque des revendications 2 à 7, à la préparation de ciments et de produits de revêtement, application caractérisée en ce qu'on mélange la solution de résines , juste avant son emploi, avec
   A) au moins une charge et
   B) au moins un durcisseur,
   ou avec un mélange de A) et de B), le rapport pondéral de la solution à la somme des composantes A) et B) étant compris entre 1:0,5 et 1:7, de préférence entre 1:1 et 1:4.

9. Application selon la revendication 8 caractérisée en ce qu'on utilise, comme composante A), de la farine minérale, du sulfate de baryum, de la farine de quartz, de la farine de coke ou de la farine de graphite.

10. Application selon l'une des revendications 8 et 9, caractérisée en ce qu'on utilise, comme composante B), des substances acides et/ou libérant des acides.

11. Application selon l'une quelconque des revendications 8 à 10, caractérisée en ce qu'on utilise un mélange des composantes A) et B) qui a été préalablement confectionné.

12. Application selon l'une quelconque des revendications 8 à 11, caractérisée en ce que la solution de résines a une teneur en résine solide de 10 à 75 % en poids, de préférence de 25 à 70 % en poids ou, mieux encore, 45 à 55 % en poids.

Revendications pour l'Etat contractant suivant: AT

1. Procédé pour préparer des solutions de résines pour des ciments et des produits de revêtement, procédé caractérisé en ce qu'on dissout des résines époxydiques contenant plus d'un radical époxy par molécule, dans de l'alcool furfurylique seul ou en mélange avec d'autres composés furanniques, on fait réagir à des températures comprises entre 20 et 200° C en présence de catalyseurs acides ou basiques, de telle façon que la réaction des radicaux époxy avec l'alcool furfurylique et/ou les composés furanniques soit complète, puis, après la réaction, on neutralise éventuellement le catalyseur et on ajoute au mélange réactionnel des diluants qui sont uniquement des diluants réactifs.

2. Procédé selon la revendication 1 caractérisé en ce que la température réactionnelle est comprise entre 40 et 140° C.

3. Procédé selon l'une des revendications 1 et 2, caractérisé en ce que le rapport pondéral entre les diluants réactifs et la résine solide est compris entre 0,4:1 et 1,5:1, de préférence entre 0,6:1 et 1,1:1.

4. Procédé selon l'une quelconque des revendications 1 à 3, caractérisé en ce que les solutions de résines ont, à 20° C, des viscosités comprises entre 50 et 20 000 mPa.s, de préférence entre 100 et 15 000 mPa.s.

5. Procédé selon l'une quelconque des revendications 1 à 4, caractérisé en ce qu'on utilise, comme résines époxydiques, des résines époxydiques qui ont un poids équivalent d'époxy de 150 à 2000, de préférence de 170 à 1200.

6. Procédé selon l'une quelconque des revendications 1 à 5, caractérisé en ce qu'on utilise, comme composé furannique, le furfural, l'hydroxyméthylfurfural ou l'oxyde de difuryle.

7. Application des solutions de résines préparées selon l'une quelconque des revendications 1 à 6, à la préparation de ciments et de produits de revêtement, application caractérisée en ce qu'on mélange la solution de résines , juste avant son emploi, avec

A) au moins une charge et

B) au moins un durcisseur,

ou avec un mélange de A) et de B), le rapport pondéral de la solution à la somme des composantes A) et B) étant compris entre 1:0,5 et 1:7, de préférence entre 1:1 et 1:4.

8. Application selon la revendication 7 caractérisée en ce qu'on utilise, comme composante A), de la farine minérale, du sulfate de baryum, de la farine de quartz, de la farine de coke ou de la farine de graphite.

9. Application selon l'une des revendications 7 et 8, caractérisée en ce qu'on utilise, comme composante B), des substances acides et/ou libérant des acides.

10. Application selon l'une quelconque des revendications 7 à 9, caractérisée en ce qu'on utilise un mélange des composantes A) et B) qui a été préalablement confectionné.

11. Application selon l'une quelconque des revendications 7 à 10, caractérisée en ce que la solution de résines a une teneur en résine solide de 10 à 75 % en poids, de préférence de 25 à 70 % en poids ou, mieux encore, de 45 à 55 % en poids.